# EUROPEAN PATENT APPLICATION

(11) **EP 4 682 471 A1**
(43) Date of publication of application: **21.01.2026**
(21) Application number: 24770629.4
(22) Date of filing: 05.03.2024
(51) Int. Cl.: G01C 21/34, G05D 1/43, G08G 1/0962

(54) **MOVEMENT ROUTE DETERMINATION SYSTEM, AUTONOMOUS MOBILE DEVICE, MOVEMENT ROUTE DETERMINATION METHOD, AND PROGRAM**

(30) Priority: 15.03.2023 JP 2023041006
(71) Applicant: OMRON Corporation, Kyoto-shi, Kyoto 600-8530 (JP)
(72) Inventor: TORII, Takuya, Kyoto-shi, Kyoto 600-8530 (JP)
(74) Representative: HGF
(86) International application number: PCT/JP2024/008199
(87) International publication number: WO 2024/190519

(57) **Abstract**

Provided are a movement route determination system, an autonomous mobile device, a movement route determination method, and a program which enable improvement of accuracy of determining the movement route. A movement route determination system (4) includes an arithmetic circuit (7) including a first mode of using a learning-based first algorithm (8) using a trained model trained to, in response to input of input data relating to a surrounding condition of an autonomous mobile device (1), output output data relating to a movement route of the autonomous mobile device (1), to determine the movement route, and a second mode of using a non-learning-based second algorithm (9) using a predetermined determination rule of the movement route to determine the movement route, and having functions of performing the first mode when the surrounding condition is a trained surrounding condition for the trained model and of performing the second mode when the surrounding condition is not the trained surrounding condition.

## Description

### TECHNICAL FIELD

The present disclosure relates to movement route determination systems, autonomous mobile devices, movement route determination methods, and programs.

### BACKGROUND ART

Patent Document 1 provides a path determination device, etc., with which, even in a traffic environment such as a crowd, a path of an autonomous robot can be determined such that the robot can move smoothly to a destination while avoiding interference with traffic participants. This path determination device uses a CNN to determine a provisional movement velocity command v_cnn such that interference between a robot and traffic participants is avoided and uses a DWA to determine a movement velocity command v for the robot, assuming that the robot moves from the present position thereof according to the provisional movement velocity command v_cnn, such that an objective function G(v) including as independent variables a distance dist between the robot and the nearest traffic participant and the provisional movement velocity command v_cnn of the robot is maximized.

### PRIOR ART DOCUMENTS

### PATENT DOCUMENTS

Patent Document 1: WO 2020/136977 A1

### SUMMARY OF THE INVENTION

### PROBLEMS TO BE SOLVED BY THE INVENTION

The path determination device disclosed in Patent Document 1 determines the path (movement route) by using a CNN. Generally, in learning-based algorithms that utilize such trained models, the optimal route is not always determined. This can be a factor contributing to the decline in the accuracy of determination of the route.

The present disclosure provides a movement route determination system, an autonomous mobile device, a movement route determination method, and a program which enable improvement of accuracy of determining the movement route.

### SOLUTIONS TO THE PROBLEMS

A movement route determination system according to one aspect of the present disclosure includes an arithmetic circuit including a first mode of using a learning-based first algorithm using a trained model trained to, in response to input of input data relating to a surrounding condition of an autonomous mobile device, output output data relating to a movement route of the autonomous mobile device, to determine the movement route, and a second mode of using a non-learning-based second algorithm using a predetermined determination rule of the movement route to determine the movement route, and having functions of performing the first mode when the surrounding condition is a trained surrounding condition for the trained model and of performing the second mode when the surrounding condition is not the trained surrounding condition.

An autonomous mobile device according to one aspect of the present disclosure includes: the movement route determination system; a sensor system for obtaining a surrounding condition of the autonomous mobile device; and a moving mechanism configured to move according to a movement route determined by the movement route determination system.

A movement route determination method according to one aspect of the present disclosure is a movement route determination method performed by an arithmetic circuit accessible to a learning-based first algorithm using a trained model trained to, in response to input of input data relating to a surrounding condition of an autonomous mobile device, output output data relating to a movement route of the autonomous mobile device, to determine the movement route, and a non-learning-based second algorithm using a predetermined determination rule of the movement route to determine the movement route, and includes, based on determination of whether the surrounding condition is a trained surrounding condition for the trained model, determining the movement route by using the first algorithm when the surrounding condition is the trained surrounding condition, and determining the movement route by using the second algorithm when the surrounding condition is not the trained surrounding condition.

A program according to one aspect of the present disclosure is a program for enabling an arithmetic circuit to perform the movement route determination method.

### EFFECTS OF THE INVENTION

Aspects of the present disclosure enable improvement of accuracy of determining the movement route.

### BRIEF DESCRIPTION OF THE DRAWINGS

Fig. 1 is a block diagram of an autonomous mobile device according to Embodiment 1.
Fig. 2 is a block diagram of one example of an inference program of a trained model according to Embodiment 1.
Fig. 3 is an explanatory diagram of a first example of a movement route by a second algorithm according to Embodiment 1.
Fig. 4 is an explanatory diagram of a second example of a movement route by the second algorithm according to Embodiment 1.
Fig. 5 is an explanatory diagram of a first example of a movement route by a first algorithm according to Embodiment 1.
Fig. 6 is an explanatory diagram of a second example of a movement route by the first algorithm according to Embodiment 1.
Fig. 7 is a flowchart of determining a movement route of the autonomous mobile device according to Embodiment 1.
Fig. 8 is an explanatory diagram of one example of a movement route of the autonomous mobile device according to Embodiment 1.
Fig. 9 is a flowchart of determining a movement route of an autonomous mobile device according to Embodiment 2.
Fig. 10 is an explanatory diagram of one example of a movement route by a first algorithm according to Embodiment 2.
Fig. 11 is an explanatory view of a first example of comparison between movement routes of first input data and second input data according to Embodiment 2.
Fig. 12 is an explanatory diagram of a second example of comparison between movement routes of first input data and second input data according to Embodiment 2.
Fig. 13 is a flowchart of determining a movement route of an autonomous mobile device according to Embodiment 3.
Fig. 14 is a flowchart of determining a movement route of an autonomous mobile device according to Embodiment 4.

### DETAILED DESCRIPTION

### [1. EMBODIMENTS]

Hereinafter, embodiments of the present disclosure will be described with reference to the drawings where appropriate. However, the following embodiments are merely examples for explaining the present disclosure, and are not intended to limit the present disclosure to the following content. Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.

In the following description, if it is necessary to distinguish a plurality of components from each other, prefixes, such as, "first", "second", or the like are attached to names of such components. However, if these components can be distinguished from each other by reference signs attached to those components, such prefixes, such as, "first", "second", or the like, may be omitted in consideration of readability of texts.

### [1.1 EMBODIMENT 1]

### [1.1.1 CONFIGURATIONS]

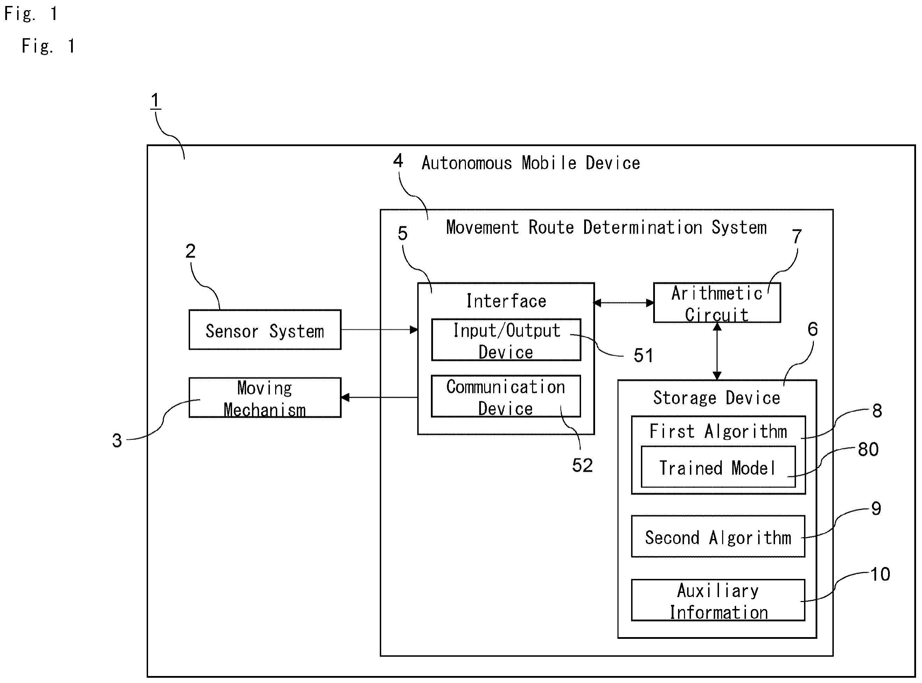

Fig. 1 is a block diagram of an autonomous mobile device 1 according to Embodiment 1. The autonomous mobile device 1 determines its movement route according to a surrounding condition. Examples of the autonomous mobile device 1 may include an AMR (Autonomous Mobile Robot), a mobile manipulator, an electric wheelchair, an autonomous mobile device assisting people (such as those with visual impairments), and the like.

The autonomous mobile device 1 includes a sensor system 2, a moving mechanism 3, and the movement route determination system 4.

The sensor system 2 is configured to obtain (acquire) information on a surrounding condition of the autonomous mobile device 1. The surrounding condition may include a condition in which a mobile entity exists in the moving direction of the autonomous mobile device 1. The mobile entity is an object or entity that can influence the determination of the movement route of the autonomous mobile device 1. From another perspective, the mobile entity is an object or entity that the autonomous mobile device 1 should avoid colliding with. In general, mobile entities are visually recognizable. Examples of a state of the mobile entity include a moving state and a stop state. The mobile entity may be movable externally, for example, by human operation, or may be autonomously movable. In the present embodiment, the mobile entity is a person (for example, a pedestrian). Hereinafter, "mobile entity" may sometimes be referred to as "person," but this is solely for the sake of clarity and simplicity of description, and does not intend to limit the mobile entity to a person. Therefore, a mobile entity may be not only a person, but also other living beings such as animals. Furthermore, a mobile entity may be not only a living being, but also an inanimate object. Examples of the inanimate object include vehicles such as bicycles, wheelchairs, automobiles, ships, aircraft, as well as other mobile objects such as drones. The mobile entity may also include an AMR, AGV, forklift, mobile manipulator, or autonomous mobile device that supports visually impaired persons. The mobile entity may be not only the entire body of the object but also a part of the object.

The information on the surrounding condition obtained by the sensor system 2 may include images or distance data of the surrounding condition. The image of the surrounding condition may include, for example, an image in the moving direction of the autonomous mobile device 1. The image in the moving direction of the autonomous mobile device 1 may be, for example, an image of the area in front of the autonomous mobile device 1. The image may include a still image or a moving image. The sensor system 2 may include an image sensor for obtaining image data of the surrounding condition. The type of image sensor is not particularly limited, but it is preferable that it can obtain the depth of the surrounding condition, and it may be, for example, an RGBD camera or a stereo camera. If the image sensor is a monocular RGB camera, the sensor system 2 may include a LiDAR to obtain the depth of the surrounding condition. The distance of the surrounding condition may include, for example, the distance to an object in the vicinity of the autonomous mobile device 1. The sensor system 2 may include a distance sensor for obtaining distance data of the surrounding condition. The type of distance sensor is not particularly limited, but it is preferably a LiDAR.

The moving mechanism 3 is a mechanism that enables autonomous movement of the autonomous mobile device 1. In particular, the moving mechanism 3 is a mechanism that enables autonomous movement of the autonomous mobile device 1 within the horizontal plane. There are various types of moving mechanisms. In the present embodiment, the moving mechanism 3 is a wheel-type structure. The moving mechanism 3 includes multiple wheels including one or more drive wheels, and motors for rotating one or more drive wheels. The moving mechanism 3 may also be a leg-type structure, such as a bipedal walking type, rather than a wheel-type structure.

The movement route determination system 4 determines the movement route of the autonomous mobile device 1 according to a surrounding condition of the autonomous mobile device 1. The movement route determination system 4 includes an interface 5, a storage device 6, and an arithmetic circuit 7.

The interface 5 is used for input of information to the movement route determination system 4 and output of information from the movement route determination system 4. The interface 5 includes an input output device 51 and a communication device 52. The input output device 51 has a function as an input device for inputting information from users, and an output device for outputting information to users. The input output device 51 includes one or more human-machine interfaces. Examples of human-machine interfaces may include input devices such as keyboards, pointing devices (mouses, trackballs), and touch pads, output devices such as displays, and loud speakers, and input and output device such as touch panels. The communication device 52 is communicably connected to external devices or systems. In the present embodiment, the communication device 52 is used for communication with the sensor system 2 and the moving mechanism 3 via communication networks. The communication device 52 includes one or more communication interfaces. The communication device 52 is connectable to one or more communication networks and has a function of performing communication via communication networks. The communication device 52 is in accordance with a predetermined communication protocol. The predetermined communication protocol may be selected from conventional various wired and wireless communication standards.

The storage device 6 is used for storing information used by the arithmetic circuit 7 and information generated by the arithmetic circuit 7. The storage device 6 includes one or more storage components (non-transitory storage media). The storage components may be any of hard disc drives, optical drives, and solid state drives (SSD). Further, the storage components may be any of an internal type device, an external type device, and a NAS (network-attached storage) type device.

Information stored in the storage device 6 include first algorithm 8, second algorithm 9, and auxiliary information 10. The first algorithm 8, the second algorithm 9 and the auxiliary information 10 may not be necessarily always stored in the storage device 6 but may be stored in the storage device 6 when required by the arithmetic circuit 7.

The first algorithm 8 is a learning-base algorithm using a trained model 80. The trained model 80 is trained to, in response to input of input data relating to the surrounding condition of the autonomous mobile device 1, output output data relating to a movement route of the autonomous mobile device 1.

The input data, in particular, relates to the surrounding condition in which a mobile entity exists around the autonomous mobile device 1. The input data includes at least one of self-related data relating to the autonomous mobile device 1 and counterpart data relating to the mobile entity. The self-related data includes at least one of the position or orientation of the autonomous mobile device 1. The counterpart data includes at least one of the position, orientation, or skeleton of the mobile entity.

The input data is determined by using the image and distance data of the surrounding condition of the autonomous mobile device 1 obtained from the sensor system 2. For example, the self-related data is determined based on data extracted by self-localization techniques or the like from the distance data of the surrounding condition of the autonomous mobile device 1 obtained from the sensor system 2. The counterpart data is determined based on data extracted by image processing techniques such as skeleton estimation or face pose estimation or the like from the image data of the surrounding condition of the autonomous mobile device 1 obtained from the sensor system 2.

The mobile entity is a mobile entity control relating to movement or controlled movement operation of which is unknown in advance. "Control relating to movement is unknown in advance" means that the mobile entity detection system 4 does not have information (for example, movement rules of the mobile entity) about how the movement of the mobile entity is controlled. "Controlled movement operation is unknown in advance" means that the mobile entity detection system 4 does not have information (for example, the movement route itself of the mobile entity) about what kind of movement operation the mobile entity will perform. In other words, a mobile entity whose control relating to movement or controlled movement operation is not known in advance can be regarded as a mobile entity whose movement route is unknown (undeterminable) to the autonomous mobile device 1. From another perspective, a mobile entity whose control relating to movement or controlled movement operation is not known in advance is a mobile entity which is one or more of mobile entities detected by the autonomous mobile device 1 and other than a "mobile entity whose movement control or controlled movement operation is known in advance." An example of a "mobile entity whose control relating to movement or controlled movement operation is known in advance" is a gate device installed at a location where the autonomous mobile device 1 moves and that performs a predetermined opening/closing operation. Furthermore, even with the same mobile entity, if the mobile entity is detected from a long distance and its movement route is predetermined, it can constitute a "mobile entity control relating to movement or controlled movement operation of which is known in advance." On the other hand, if the mobile entity suddenly appears at a short distance and its movement route has not yet been determined, it can constitute a "mobile entity control relating to movement or controlled movement operation of which is unknown in advance."

The output data, in particular, relates to the shortest movement route that avoids collision with the mobile entity. The output data includes information that is used for determining the movement route of the autonomous mobile device 1. The output data relating to the movement route includes a movement target value of the autonomous mobile device 1, as an example of information used for determining the movement route of the autonomous mobile device 1. The movement target value of the autonomous mobile device 1 may include at least one of a target position or target orientation of the autonomous mobile device 1.

In this way, the trained model 80 learns the shortest movement route that does not collide with the mobile entity under the surrounding condition where the mobile entity exists around the autonomous mobile device 1. In the trained model 80, a trained surrounding condition is a surrounding condition that the mobile entity exists around the autonomous mobile device 1. In particular, in the present embodiment, the surrounding condition that the mobile entity exists around the autonomous mobile device 1 corresponds to a condition or situation that the autonomous mobile device 1 passes by the mobile entity.

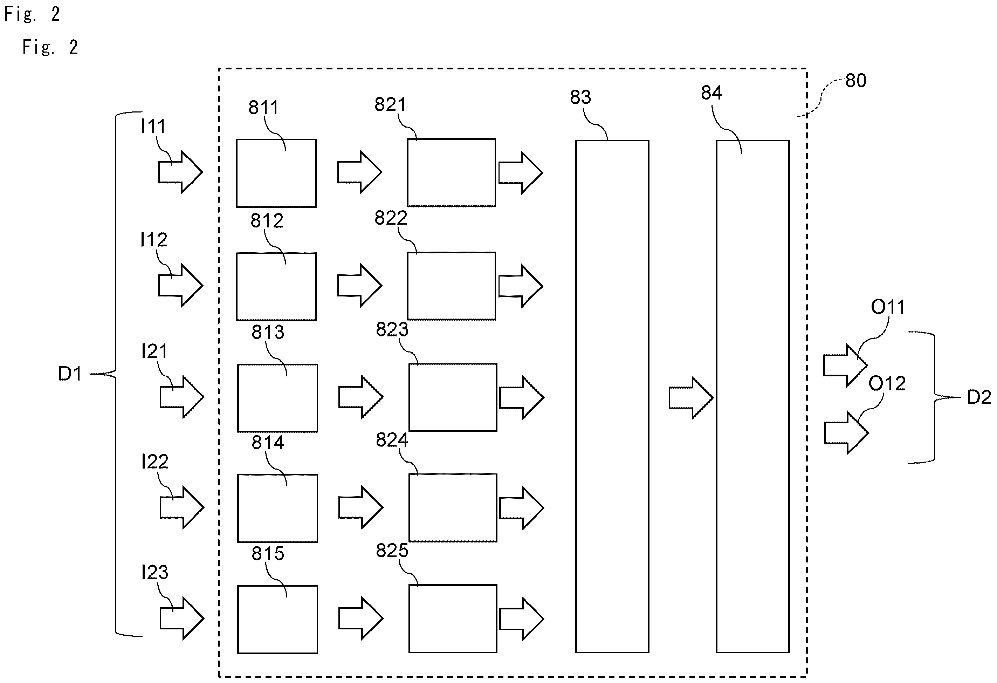

Fig. 2 is a block diagram of one example of an inference program of the trained model 80. The trained model 80 outputs output data D2 in response to input of input data D1. The input data D1 includes data I11 indicating the position or location of the autonomous mobile device 1, data I12 indicating the orientation of the autonomous mobile device 1, data I21 indicating the position or location of the mobile entity, data I22 indicating the body posture of the mobile entity, and data I23 indicating the face orientation of the mobile entity. The output data D2 includes data O21 indicating the target position of the autonomous mobile device 1 ad data O12 indicating the target orientation of the autonomous mobile device 1.

The trained model 80 includes first to fifth network mechanisms 811 to 815, first to fifth attention mechanisms 821 to 825, a connecting part 83, and an output part 84.

The first to fifth network mechanisms 811 to 815 extract one or more features from the time-series pieces of the data I11 to I15, respectively.
The first to fifth network mechanisms 811 to 815 include an architecture of a recurrent neural network (RNN) such as a long short-term memory (LSTM) or a gated recurrent unit (GRU), for example.

The first to fifth attention mechanisms 821 to 825 connected to the first to fifth network mechanisms 811 to 815, respectively and include a temporal attention mechanism. Accordingly, one or more features of a piece of the data I11 which is considered the most important time point of the time-series pieces of the data I11 are extracted and then input into the connecting part 83, for example.

The connecting part 83 inputs features of the pieces of the data I11, I21 , and I21 to I23 collectively into the output part 84. The connecting part 83 inputs one or more features of pieces of the data I11, I21 , and I21 to I23 considered the most important time point from the first to fifth attention mechanisms 821 to 825, into the output part 84.

The output part 84 outputs the output data D2 from features from the connecting part 83. The output part 84 includes a fully-connected layer, for example. The fully-connected layer includes a softmax function, for example.

The first algorithm 8 inputs the input data D1 into the trained model 80 to allow the trained model 80 to output the output data D2. The output data D2 includes data O21 indicating the target position of the autonomous mobile device 1 and data O12 indicating the target orientation of the autonomous mobile device 1. Using the first algorithm 8 makes it possible to obtain the target position and the target orientation of the autonomous mobile device 1 based on the position and the orientation of the autonomous mobile device 1 as well as the position, the body posture, and the face orientation of the mobile entity. Therefore, the movement route of the autonomous mobile device 1 can be determined.

The second algorithm 9 is a non-learning-base algorithm using a predetermined determination rule of a movement route. The second algorithm 9 uses, as inputs, the starting point (current position), the destination point (goal position), map information around the autonomous mobile device 1, and a result of movement prediction of the mobile entity present around the autonomous mobile device 1, and outputs the shortest route or path from the starting point to the destination point. As a method for obtaining the shortest route, a search-based approach can be used. Because the shortest route from the starting point to the destination point is set to avoid collision with the mobile entity, it may change according to the predicted movement of the mobile entity. As for the algorithm for setting the shortest route and the algorithm for predicting the movement of the mobile entity, conventional known algorithms can be applied.

The auxiliary information 10 may include information necessary for determining the movement route by the first algorithm 8 or the second algorithm 9. In the present embodiment, the auxiliary information 10 may include the starting point, the destination point, the map information, and a mobile entity whose movement route is registered in advance. The starting point, the destination point, and the mobile entity whose movement route is registered in advance may be provided in advance. The map information may also be given in advance, or may be automatically generated using the sensor system 2.

The arithmetic circuit 7 is a circuit for controlling operation of the movement route determination system 4. The arithmetic circuit 7 is connected to the interface 5 and is accessible to the storage device 6 (i.e., accessible to the first algorithm 8, the second algorithm 9, and the auxiliary information 10). The arithmetic circuit 7 can be realized or implemented by a computer system including one or more memories and one or more processors (microprocessors). The one or more processors perform a program (stored in the one or more memories or the storage device 6) to realize or implement functions as the arithmetic circuit 7. The program herein may be stored in the storage device 6 in advance, but may be provided via a telecommunications line such as the Internet or as being stored in a non-transitory storage medium such as a memory card.

The arithmetic circuit 7 is configured to perform a movement route determination process for determining the movement route of the autonomous mobile device 1. In the movement route determination process, the arithmetic circuit 7 includes a first mode and a second mode. The first mode uses the first algorithm 8 to determine the movement route. The second mode uses the second algorithm 9 to determine the movement route.

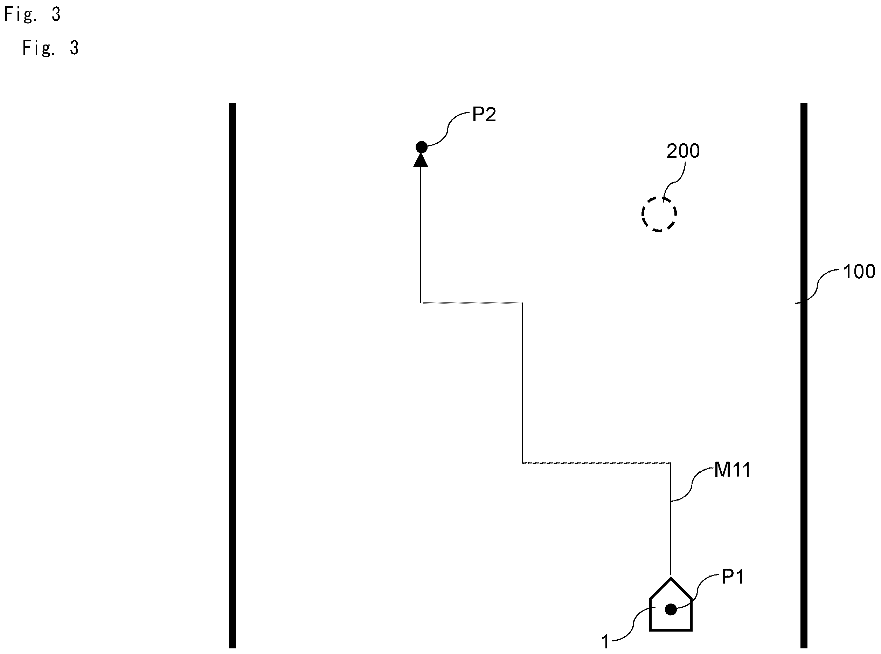

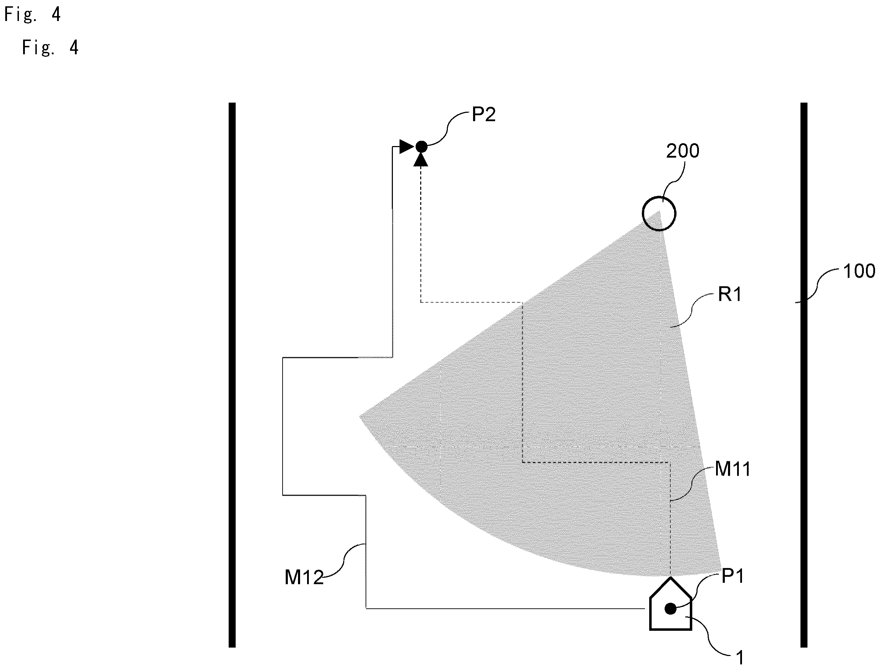

Referring to Figs. 3 and 4, how to determine the movement route by the second algorithm 9 will be described. Figs. 3 and 4 illustrate a situation the autonomous mobile device 1 moves from the starting point P1 to the destination point P2 in a facility 100.

Fig. 3 is an explanatory diagram of a first example of a movement route determined by the second algorithm 9. In the first example, there is no mobile entity 200 around the autonomous mobile device 1. Therefore, the second algorithm 9 determines the shortest route from the starting point P1 to the destination point P2 as a movement route M11, without being affected by the movement prediction result of the mobile entity 200.

Fig. 4 is an explanatory diagram of a second example of a movement route determined by the second algorithm 9. In the second example, there is a mobile entity 200 around the autonomous mobile device 1. The second algorithm 9 determines, as a movement route M12, the shortest route from the starting point P1 to the destination point P2 that avoids a region R1 where there is a possibility of collision with the mobile entity 200, based on the movement prediction result of the mobile entity 200. Since the movement route M12 detours around the region R1, it is longer than the movement route M11.

The larger the region R1 is, the longer the movement route M12 may be compared to the movement route M11. The size of the region R1 is likely to depend on the prediction accuracy of the movement of the mobile entity 200. The worse the prediction accuracy of the movement of the mobile entity 200 is, the larger the region R1 becomes, and the more likely the movement route M12 is to be set to make a wide detour around the region R1. In other words, when the movement prediction accuracy of the mobile entity 200 is low, the movement route is generated so as to move away from the mobile entity 200 in order to consider the risk of collision.

In this way, the second algorithm 9 is more likely to be able to accurately determine the movement route of the autonomous mobile device 1 when there is no mobile entity 200 around the autonomous mobile device 1. On the other hand, when there is a mobile entity 200 around the autonomous mobile device 1, the second algorithm 9 is more likely to be affected by the prediction accuracy of the movement of the mobile entity 200, which makes it harder to accurately determine the movement route of the autonomous mobile device 1. That is, the second algorithm 9 is efficient if there is no mobile entity 200 around the autonomous mobile device 1, but tends to become inefficient if the prediction accuracy of the movement of the mobile entity 200 is poor.

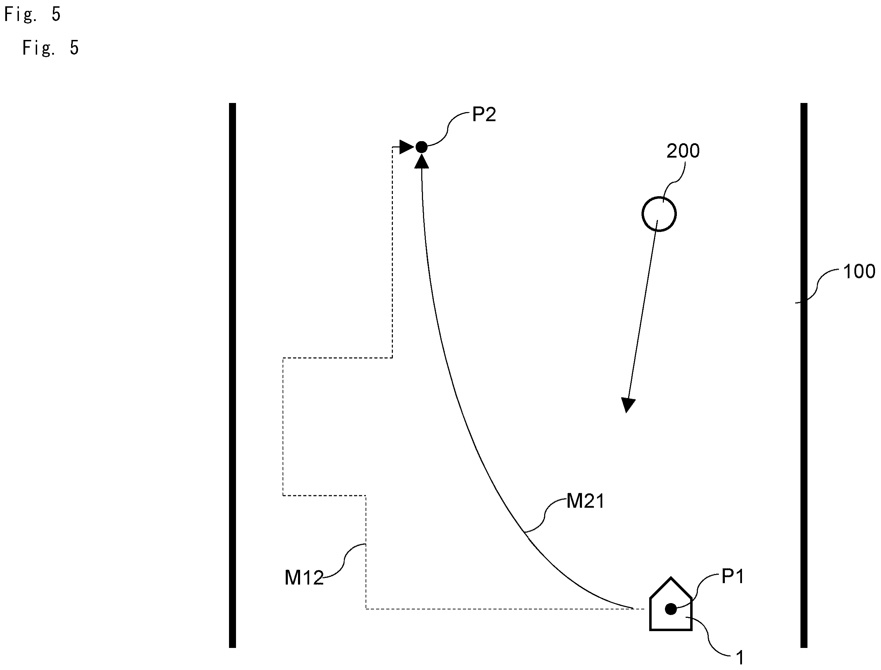

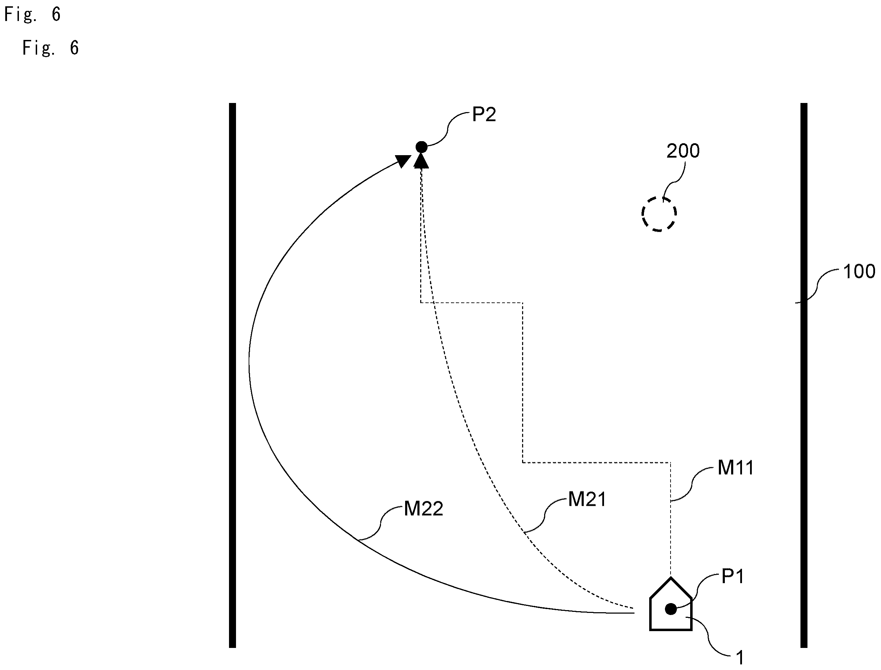

Referring to Figs. 5 and 6, how to determine the movement route by the first algorithm 8 will be described. Similarly to Figs. 3 and 4, Figs. 5 and 6 illustrate a situation the autonomous mobile device 1 moves from the starting point P1 to the destination point P2 in the facility 100.

Fig. 5 is an explanatory diagram of a first example of a movement route determined by the first algorithm 8. In the first example, there is a mobile entity 200 around the autonomous mobile device 1. The first algorithm 8 determines a movement route M21 using the trained model 80. As described above, the trained model 80 has learned the shortest movement route that does not collide with the mobile entity 200 under the surrounding condition that the mobile entity 200 exists around the autonomous mobile device 1. Therefore, the movement route M21 determined by the first algorithm 8 is highly likely to be shorter than the movement route M12 determined by the second algorithm 9.

Fig. 6 is an explanatory diagram of a second example of a movement route determined by the first algorithm 8. In the second example, there is no mobile entity 200 around the autonomous mobile device 1. When there is no mobile entity 200, the first algorithm 8 cannot input to the trained model 80 information (such as the position, the body posture, and the face orientation) regarding the mobile entity 200. The surrounding condition that there is no mobile entity 200 corresponds to an untrained surrounding condition for the trained model 80. In such a case, the first algorithm 8 may determine a movement route M22 that is longer than the movement route M21, or in some cases, may fail to complete the task of determining a movement route. In other words, the learning-based first algorithm 8 does not always output the optimal (short-takt-time) movement route. In particular, since the first algorithm 8 uses the trained model 80, the process that generates the output data functions as a black box. Moreover, the accuracy of the trained model 80 can depend on the variety and quantity of training data sets used in machine learning. If there is insufficient data, inappropriate movement routes could be generated.

Thus, when the surrounding condition of the autonomous mobile device 1 is a trained surrounding condition for the trained model 80, the first algorithm 8 is highly likely to be able to determine the movement route of the autonomous mobile device 1 with high precision. On the other hand, when the surrounding condition of the autonomous mobile device 1 is not a trained surrounding condition for the trained model 80 (i.e., when it is an untrained surrounding condition), the first algorithm 8 is less likely to be able to determine the movement route of the autonomous mobile device 1 accurately. In the present embodiment, the first algorithm 8 is efficient if the mobile entity 200 exists around the autonomous mobile device 1, but tends to be inefficient if there is no mobile entity 200 around the autonomous mobile device 1.

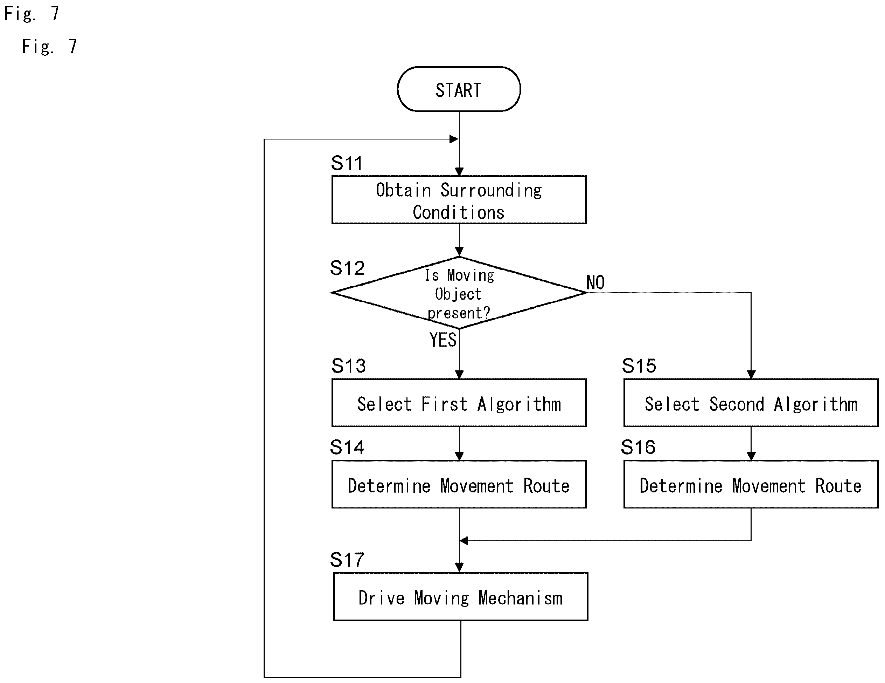

The arithmetic circuit 7 selects between the first algorithm 8 and the second algorithm 9 when determining the movement route of the autonomous mobile device 1. Fig. 7 is a flowchart of determining a movement route performed by the arithmetic circuit 7 of the autonomous mobile device 1.

The arithmetic circuit 7 obtains the surrounding condition from the sensor system 2 (S11).

The arithmetic circuit 7 determines, based on the surrounding condition, whether a mobile entity is present around the autonomous mobile device 1 (S12). As an example, the presence of a mobile entity is determined using the image and distance data of the surrounding condition of the autonomous mobile device 1 obtained from the sensor system 2. In the present embodiment, the surrounding condition that a mobile entity exists around the autonomous mobile device 1 corresponds to a learned surrounding condition. Therefore, step S12 is equivalent to determining whether the surrounding condition is a learned surrounding condition.

If the arithmetic circuit 7 confirms the presence of a mobile entity around the autonomous mobile device 1 (S12; YES), it performs the first mode. In the first mode, the arithmetic circuit 7 selects the first algorithm 8 (S13) and determines the movement route of the autonomous mobile device 1 using the first algorithm 8 (S14). This is equivalent, in the present embodiment, to confirming that the surrounding condition is a learned surrounding condition and determining the movement route using the first algorithm 8.

If the arithmetic circuit 7 confirms the absence of a mobile entity around the autonomous mobile device 1 (S12; NO), it performs the second mode. In the second mode, the arithmetic circuit 7 selects the second algorithm 9 (S15) and determines the movement route of the autonomous mobile device 1 using the second algorithm 9 (S16). This is equivalent to confirming that the surrounding condition is not a learned surrounding condition and determining the movement route using the second algorithm 9.

The arithmetic circuit 7 drives the moving mechanism 3 based on the determined movement route (S17).

Thereafter, the process returns to step S11, and the arithmetic circuit 7 again determines whether to select the first algorithm 8 or the second algorithm 9. Here, the switching decision between the first algorithm 8 and the second algorithm 9 may, for example, be executed at one-second intervals.

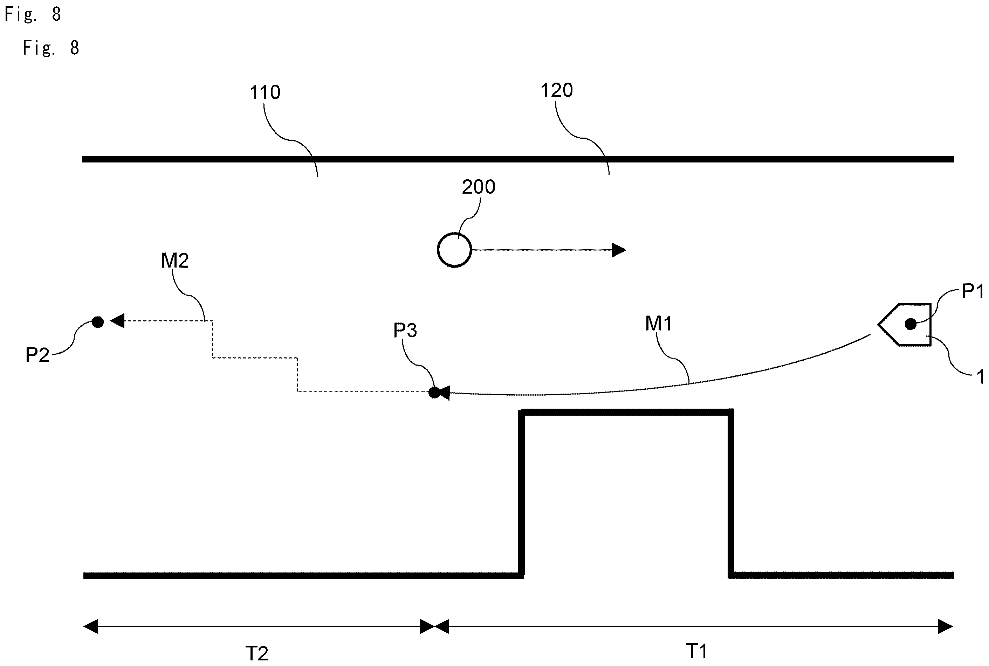

Fig. 8 is an explanatory diagram of an example of a movement route of the autonomous mobile device 1. Fig. 8 shows a situation in which the autonomous mobile device 1 moves from the starting point P1 to the destination point P2 in the facility 110.

As shown in Fig. 8, there is a narrow passageway 120 in the facility 110. A mobile entity 200 exists ahead of the passageway 120 as seen from the autonomous mobile device 1. In the narrow passageway 120, there is a high possibility that the autonomous mobile device 1 and the mobile entity 200 will pass each other. At the starting point P1, the arithmetic circuit 7 determines that a mobile entity 200 is present around the autonomous mobile device 1. Therefore, the arithmetic circuit 7 selects the first algorithm 8 and determines the movement route M1 of the autonomous mobile device 1 using the first algorithm 8. While it is determined that a mobile entity 200 is present around the autonomous mobile device 1, the autonomous mobile device 1 moves along the movement route M1 determined by the first algorithm 8 and reaches a point P3. At the point P3, the passing of the mobile entity 200 is complete. At the point P3, the arithmetic circuit 7 determines that a mobile entity 200 is no longer present around the autonomous mobile device 1. Therefore, the arithmetic circuit 7 selects the second algorithm 9 and determines the movement route M2 of the autonomous mobile device 1 using the second algorithm 9. While it is determined that a mobile entity 200 is not present around the autonomous mobile device 1, the autonomous mobile device 1 moves along the movement route M2 determined by the second algorithm 9 and reaches the destination point P2.

The movement route determination system 4 uses the first algorithm 8 to determine the movement route M1 during the period T1 in which the autonomous mobile device 1 moves from the starting point P1 to the point P3, and uses the second algorithm 9 to determine the movement route M2 during the period T2 in which the autonomous mobile device 1 moves from the point P3 to the destination point P2.

In this way, the movement route determination system 4 selects the one of the learning-based first algorithm 8 and the non-learning-based second algorithm 9 that can accurately determine the movement route of the autonomous mobile device 1 according to the surrounding condition of the autonomous mobile device 1, and determines the movement route. Therefore, the movement route determination system 4 enables improvement of accuracy of determining the movement route.

### [1.1.2 ADVANTEGEOUS EFFECTS]

The aforementioned movement route determination system 4 includes the arithmetic circuit 7 including the first mode of using the learning-based first algorithm 8 using the trained model trained to, in response to input of the input data D1 relating to a surrounding condition of the autonomous mobile device 1, output the output data D2 relating to a movement route of the autonomous mobile device 1, to determine the movement route, and the second mode of using the non-learning-based second algorithm 9 using a predetermined determination rule of the movement route to determine the movement route, and having functions of performing the first mode when the surrounding condition is a trained surrounding condition for the trained model 80 and of performing the second mode when the surrounding condition is not the trained surrounding condition. This configuration enables improvement of accuracy of determining the movement route.

In the movement route determination system 4, the trained surrounding condition is a surrounding condition that a mobile entity 200 exists around the autonomous mobile device 1. This configuration enables improvement of the accuracy of determining the travel path when the mobile entity 200 is present around the autonomous mobile device 1.

In the movement route determination system 4, the mobile entity 200 is a mobile entity control relating to movement or controlled movement operation of which is unknown in advance. This configuration enables improvement in the accuracy of determining the movement route when a mobile entity with an unknown movement route is present.

In the movement route determination system 4, the determination rule is set to determine, based on a current position of the autonomous mobile device 1 and a destination point of the autonomous mobile device 1, a shortest route from the current position to the destination point, as a movement route. This configuration enables improvement of the accuracy of determining the movement route when the mobile entity 200 is not present around the autonomous mobile device 1.

The aforementioned autonomous mobile device 1 includes: the movement route determination system 4; the sensor system 2 for obtaining a surrounding condition of the autonomous mobile device 1; and the moving mechanism 3 configured to move according to a movement route determined by the movement route determination system 4.

The aforementioned movement route determination system 4 appears to perform the following movement route determination method. The movement route determination method is a movement route determination method performed by the arithmetic circuit 7 accessible to the learning-based first algorithm 8 using the trained model 80 trained to, in response to input of the input data D1 relating to a surrounding condition of the autonomous mobile device 1, output the output data D2 relating to a movement route of the autonomous mobile device 1, to determine the movement route, and the non-learning-based second algorithm 9 using a predetermined determination rule of the movement route to determine the movement route, includes, based on determination of whether the surrounding condition is a trained surrounding condition for the trained model 80, determining the movement route by using the first algorithm 8 when the surrounding condition is the trained surrounding condition, and determining the movement route by using the second algorithm 9 when the surrounding condition is not the trained surrounding condition. This configuration enables improvement of accuracy of determining the movement route.

In the movement route determination method, the movement route is determined by using the first algorithm 8 when a mobile entity exists around the autonomous mobile device 1. The mobile entity 200 is a mobile entity control relating to movement or controlled movement operation of which is unknown in advance. This configuration enables improvement of accuracy of determining the movement route.

The movement route determination system 4 is realized by utilizing the arithmetic circuit 7. This means that the movement route determination method performed by the movement route determination system 4 can be realized by the arithmetic circuit 7 being executing a program. This program is a computer program for enabling the arithmetic circuit 7 to perform the movement route determination method. Such a program enables improvement of accuracy of determining the movement route.

### [1.2 EMBODIMENT 2]

### [1.2.1 CONFIGURATIONS]

As with the autonomous mobile device 1 according to Embodiment 1 shown in Fig. 1, the autonomous mobile device 1 according to Embodiment 2 includes the sensor system 2, the moving mechanism 3, and the movement route determination system 4. However, the movement route determination system 4 according to Embodiment 2 is different from Embodiment 1 in the movement route determination method by the arithmetic circuit 7.

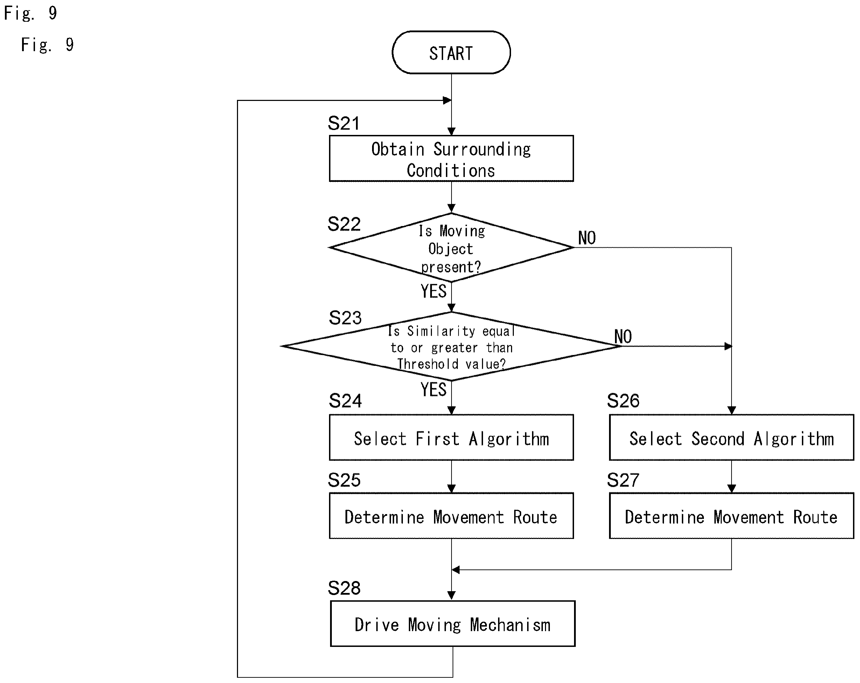

Fig. 9 is a flowchart of determination of the movement route performed by the arithmetic circuit 7 of the autonomous mobile device according to Embodiment 2.

The arithmetic circuit 7 obtains the surrounding condition from the sensor system 2 (S21).

The arithmetic circuit 7 determines, based on the surrounding condition, whether a mobile entity is present around the autonomous mobile device 1 (S22).

If the arithmetic circuit 7 confirms that a mobile entity is present around the autonomous mobile device 1 (S22; YES), it determines whether a similarity for the trained model 80 regarding the surrounding condition of the autonomous mobile device 1 is greater than or equal to a threshold value (S23). Here, the similarity refers to a similarity between a first result obtained by inputting first input data to the trained model 80, and a second result obtained by inputting second input data to the trained model 80. The first input data and the second input data will be described later.

If the arithmetic circuit 7 confirms both the presence of a mobile entity around the autonomous mobile device 1 and that the similarity is equal to or greater than the threshold value (S23; YES), it performs the first mode. In the first mode, the arithmetic circuit 7 selects the first algorithm 8 (S24) and determines the movement route of the autonomous mobile device 1 using the first algorithm 8 (S25).

If the arithmetic circuit 7 confirms the absence of a mobile entity around the autonomous mobile device 1 (S22; NO) or that the similarity is not greater than or equal to the threshold value (S23; NO), it performs the second mode. In the second mode, the arithmetic circuit 7 selects the second algorithm 9 (S26) and determines the movement route of the autonomous mobile device 1 using the second algorithm 9 (S27). In the present embodiment, this is equivalent to confirming that the surrounding condition is not a learned surrounding condition, and determining the movement route using the second algorithm 9.

The arithmetic circuit 7 drives the moving mechanism 3 based on the determined movement route (S28).

Thus, in Embodiment 2, the learned surrounding condition is a surrounding condition that a mobile entity is present around the autonomous mobile device 1 and the similarity between the first result, obtained by inputting input data to the trained model 80, and the second result, obtained by inputting verification data to the trained model 80, is equal to or greater than the threshold value. In other words, in Embodiment 2, even when a mobile entity is present around the autonomous mobile device 1, if the similarity is less than the threshold value, the surrounding condition is not regarded as a learned surrounding condition.

That is, even if a mobile entity 200 is present around the autonomous mobile device 1, the mobile entity 200 can follow a tremendous number of possible movement routes. For this reason, it is practically difficult to construct the trained model 80 by considering all possible movement routes that the mobile entity 200 could take, and even if there is a mobile entity 200, there may be some specific surrounding conditions in which learning is insufficient-namely, if the training data set is insufficient in quantity, it may not be possible to properly determine the movement route of the autonomous mobile device 1.

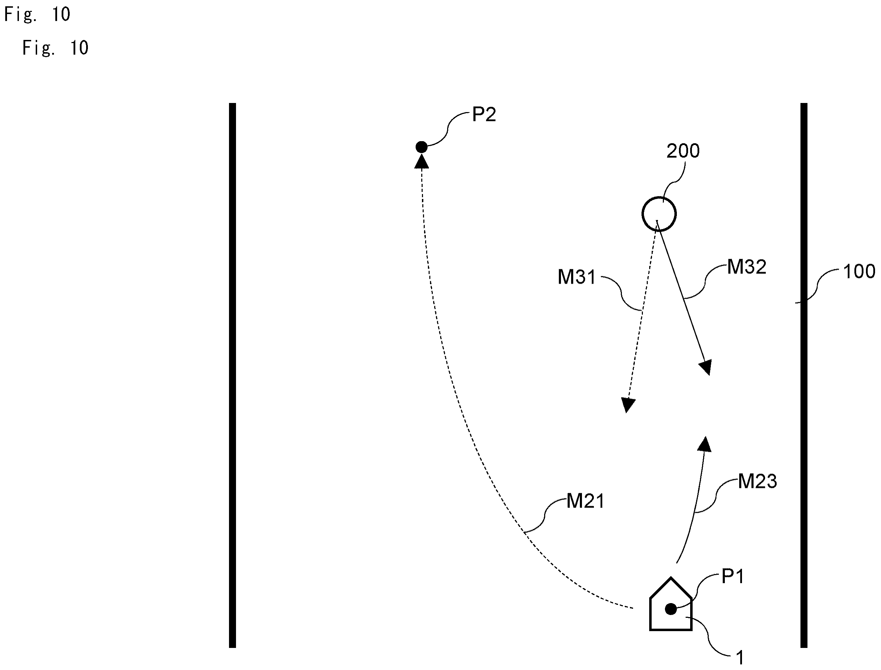

Fig. 10 is an explanatory diagram of an example of a movement route determined by the first algorithm 8. In Fig. 10, there is a mobile entity 200 around the autonomous mobile device 1. Sufficient learning has been performed concerning the surrounding condition that the mobile entity 200 moves along a movement route M31, but learning is insufficient concerning the surrounding condition that the mobile entity 200 moves along a movement route M32. In this case, for the surrounding condition that the mobile entity 200 moves along the movement route M31, the first algorithm 8 can determine the appropriate movement route M21 using the trained model 80. On the other hand, for the surrounding condition that the mobile entity 200 moves along the movement route M32, the first algorithm 8 may not be able to determine an appropriate movement route using the trained model 80 and, for example, may determine a movement route M23 in such a way that there is a risk of colliding with the mobile entity 200.

In a learned surrounding condition for the trained model 80, changes in the output data in response to changes in the input data are relatively small, whereas, in a surrounding condition that is not learned for the trained model 80, changes in the output data in response to changes in the input data tend to be relatively large. Therefore, in the present embodiment, both the presence of a mobile entity 200 around the autonomous mobile device 1 and that the similarity is equal to or greater than the threshold value are set as conditions for a learned surrounding condition.

The similarity can be, for example, specified by a distance between a vector indicating the first result and a vector indicating the second result. The similarity may also, for example, be a likelihood, variance between output values (such as a moving direction, speed, etc.), or determination results (such as deceleration, stopping). The first result and the second result may be output data of the trained model 80, or may be intermediate data of the trained model 80. As shown in Fig. 2, the intermediate data of the trained model 80 may be data indicating features output from the connecting part 83.

The first input data is input data relating to the surrounding condition obtained from the sensor system 2. The second input data is data obtained by making a change in a portion of the input data relating to the surrounding condition obtained from the sensor system 2. Examples of such changes include: making changes of no more than a predetermined amount in part of the input data, changing a value of some of a plurality of pieces of data included in the input data by a fixed value, making changes of a predetermined degree to a specific type of information within the data of the image of the surrounding condition underlying the input data, partially adding a predetermined amount of different types of data to the data of the image of the surrounding condition underlying the input data, making a fixed degree of changes to a part of the data extracted from the image of the surrounding condition underlying the input data, or differing a range of the sequence of image data of the surrounding condition in chronological order within a predetermined time from the input data. Differing the range of the sequence of image data of the surrounding condition in chronological order within a predetermined time from the input data means, for example, that if the input data is time-series data centered on a first time, the second input data is time-series data centered on a second time a certain period before or after the first time. Thus, the second input data obtained by making such a change is data in which a portion of the first input data is information that is different within a certain range or amount. The second input data is verification data generated virtually to obtain the similarity. The degree of modification may be set such that the first input data and the second input data correspond to the same surrounding condition.

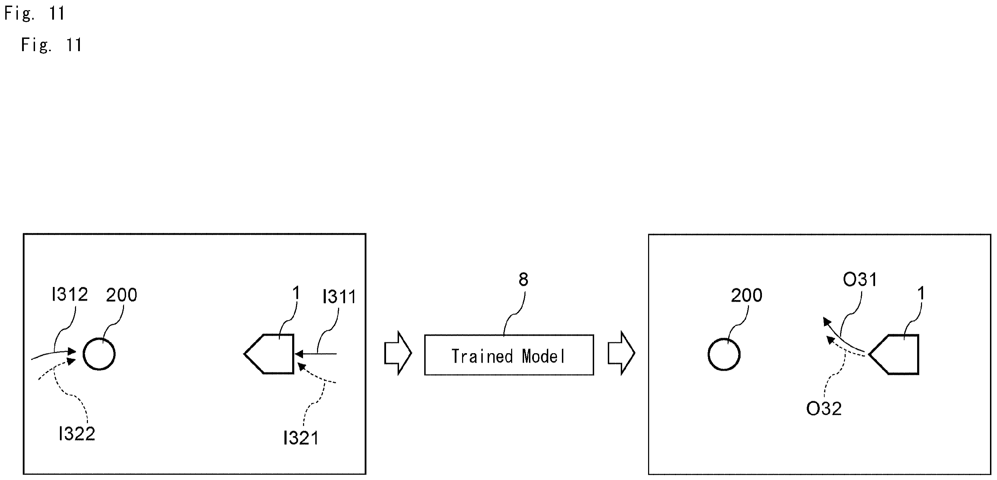

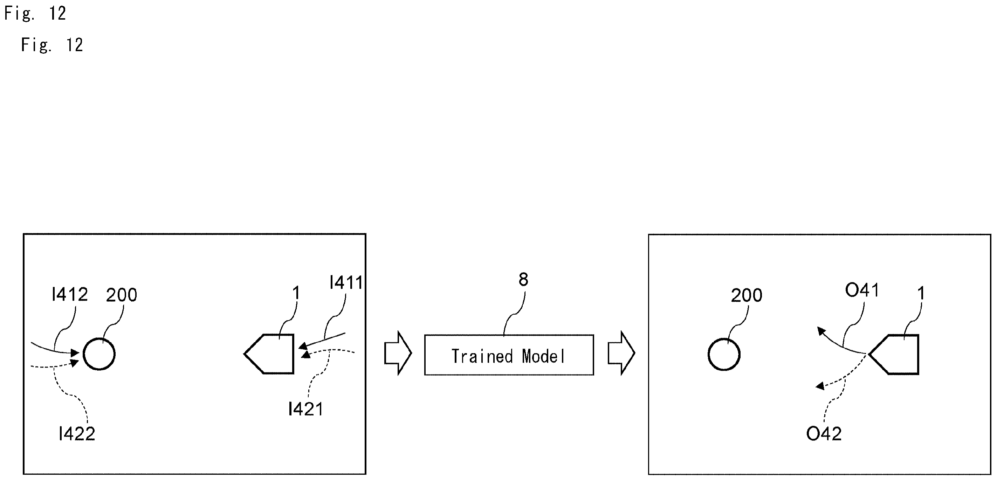

Referring to Figs. 11 and 12 the first input data and the second input data will be described below.

Fig. 11 is an explanatory diagram of a first example of comparison between movement routes of the first input data and the second input data. The first example corresponds to a learned surrounding condition. A movement route I311 of the autonomous mobile device 1 and a movement route I312 of the mobile entity 200 correspond to the first input data. A movement route O31 of the autonomous mobile device 1 is output data obtained by inputting the first input data (the movement routes I311 and I312) into the trained model 80, and corresponds to the first result. A movement route 1321 of the autonomous mobile device 1 and a movement route I322 of the mobile entity 200 correspond to the second input data. A movement route O32 of the autonomous mobile device 1 is output data obtained by inputting the second input data (the movement routes I321 and I322) into the trained model 80, and corresponds to the second result. The movement routes O31 and O32 of the autonomous mobile device 1 are substantially the same in this case, and the similarity is equal to or greater than the threshold value.

Fig. 12 is an explanatory diagram of a second example of comparison between movement routes of the first input data and the second input data. The second example corresponds to an unlearned surrounding condition. A movement route I411 of the autonomous mobile device 1 and a movement route I412 of the mobile entity 200 correspond to the first input data. A movement route O41 of the autonomous mobile device 1 is output data obtained by inputting the first input data (the movement routes I411 and I412) into the trained model 80, and corresponds to the first result. A movement route I421 of the autonomous mobile device 1 and a movement route I422 of the mobile entity 200 correspond to the second input data. A movement route O42 of the autonomous mobile device 1 is output data obtained by inputting the second input data (the movement routes I421 and I422) into the trained model 80, and corresponds to the second result. The movement routes O41 and O42 of the autonomous mobile device 1 are significantly different in this case, and the similarity is less than the threshold value.

Thus, in the present embodiment, when a mobile entity 200 is present around the autonomous mobile device 1 and when the similarity is equal to or greater than the threshold value, the arithmetic circuit 7 determines the movement route using the first algorithm 8. Therefore, it is possible to reduce the risk of determining the movement route using the trained model 80 even when the surrounding condition of the autonomous mobile device 1 is an unlearned surrounding condition for the trained model 80. This makes it possible to improve the accuracy of determining the movement route.

### [1.2.2 ADVANTEGEOUS EFFECTS]

In the aforementioned movement route determination system 4, the trained surrounding condition is a surrounding condition that a mobile entity 200 exists around the autonomous mobile device 1 and the similarity between the first result obtained by inputting the first input data into the trained model 80 and the second result obtained by inputting the second input data into the trained model 80 is equal to or greater than the threshold value. The first input data is input data relating to the surrounding condition. The second input data is data obtained by making a change in a portion of the input data relating to the surrounding condition. This configuration enables improvement of accuracy of determining the movement route.

In the movement route determination method, when the similarity between the first result obtained by inputting the first input data into the trained model 80 and the second result obtained by inputting the second input data into the trained model 80 is equal to or greater than the threshold value, the movement route is determined by using the first algorithm. The first input data is input data relating to the surrounding condition. The second input data is data obtained by making a change in a portion of the input data relating to the surrounding condition. This configuration enables improvement of accuracy of determining the movement route.

### [1.3 EMBODIMENT 3]

### [1.3.1 CONFIGURATIONS]

As with the autonomous mobile device 1 according to Embodiment 1 shown in Fig. 1, the autonomous mobile device 1 according to Embodiment 3 also includes the sensor system 2, the moving mechanism 3, and the movement route determination system 4. The movement route determination system 4 according to Embodiment 3, however, is different from Embodiment 1 in the movement route determination method.

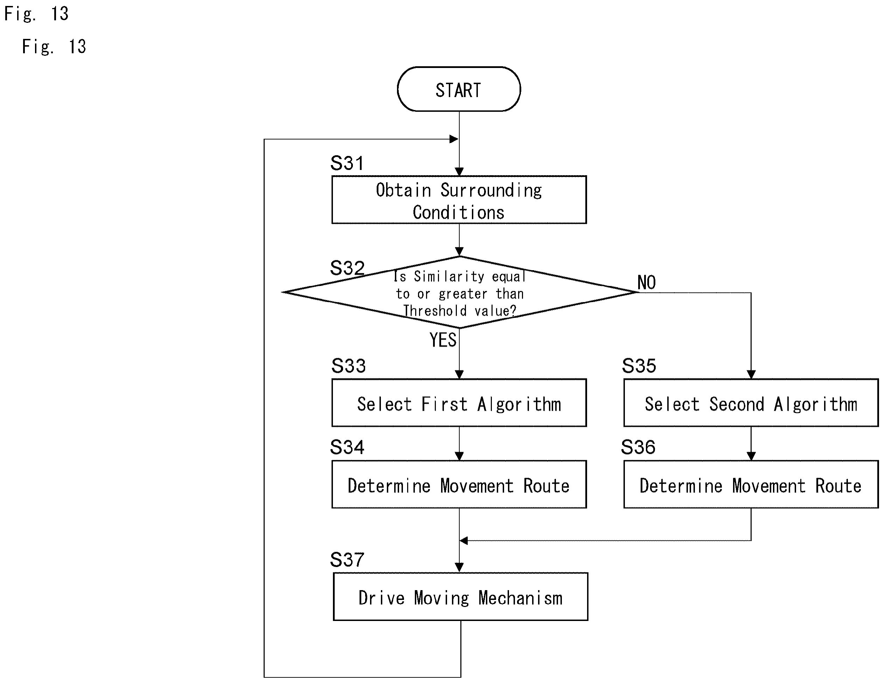

Fig. 13 is a flowchart of determining a movement route performed by the arithmetic circuit 7 of the autonomous mobile device according to Embodiment 3.

The arithmetic circuit 7 obtains the surrounding condition from the sensor system 2 (S31).

The arithmetic circuit 7 determines whether the similarity of the trained model 80 for the surrounding condition of the autonomous mobile device 1 is greater than or equal to the threshold value (S32).

If the arithmetic circuit 7 confirms that the similarity is greater than or equal to the threshold value (S32; YES), it performs the first mode. In the first mode, the arithmetic circuit 7 selects the first algorithm 8 (S33) and determines the movement route of the autonomous mobile device 1 using the first algorithm 8 (S34). In the present embodiment, this is equivalent to confirming that the surrounding condition is a learned surrounding condition, and determining the movement route using the first algorithm 8.

If the arithmetic circuit 7 determines that the similarity is not greater than or equal to the threshold value (S32; NO), it performs the second mode. In the second mode, the arithmetic circuit 7 selects the second algorithm 9 (S35) and determines the movement route of the autonomous mobile device 1 using the second algorithm 9 (S36). In the present embodiment, this is equivalent to confirming that the surrounding condition is not a learned surrounding condition, and determining the movement route using the second algorithm 9.

The arithmetic circuit 7 drives the moving mechanism 3 based on the determined movement route (S37).

Thus, in Embodiment 3, the learned surrounding condition is defined as a surrounding condition that the similarity between the first result, obtained by inputting the input data to the trained model 80, and the second result, obtained by inputting the verification data to the trained model 80, is greater than or equal to the threshold value.

### [1.3.2 ADVANTEGEOUS EFFECTS]

In the aforementioned movement route determination system 4, the trained surrounding condition is a surrounding condition that the similarity between the first result obtained by inputting the first input data into the trained model 80 and the second result obtained by inputting the second input data into the trained model 80 is equal to or greater than the threshold value. The first input data is input data relating to the surrounding condition. The second input data is data obtained by making a change in a portion of the input data relating to the surrounding condition. This configuration enables improvement of accuracy of determining the movement route.

### [1.4 EMBODIMENT 4]

### [1.4.1 CONFIGURATIONS]

As with the autonomous mobile device 1 according to Embodiment 1 shown in Fig. 1, the autonomous mobile device 1 according to Embodiment 4 includes the sensor system 2, the moving mechanism 3, and the movement route determination system 4. However, the movement route determination system 4 according to Embodiment 4 is different from Embodiment 1 in the movement route determination method by the arithmetic circuit 7.

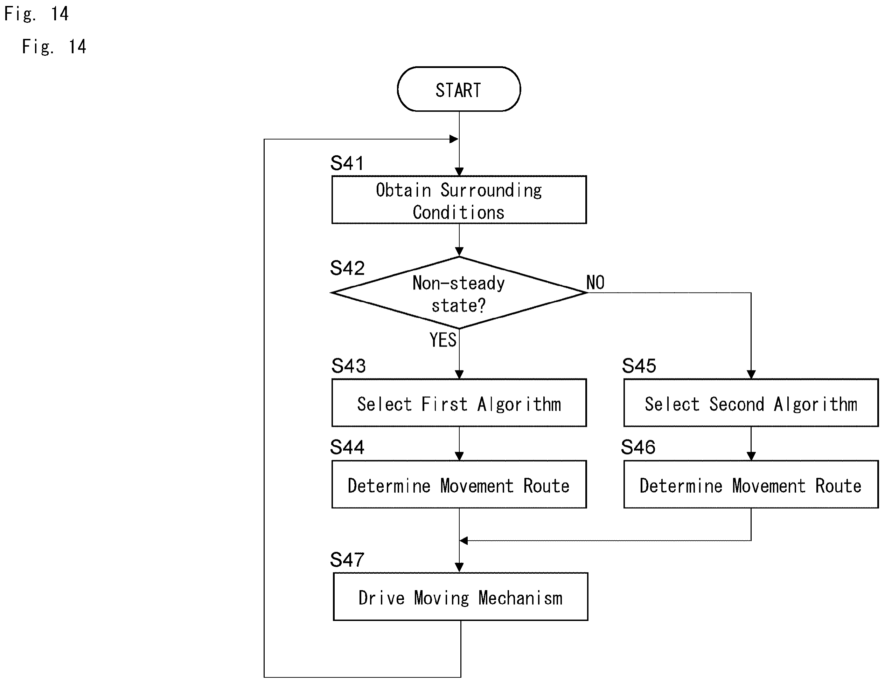

Fig. 14 is a flowchart of determining a movement route performed by the arithmetic circuit 7 of the autonomous mobile device according to Embodiment 4.

The arithmetic circuit 7 obtains the surrounding condition from the sensor system 2 (S41).

The arithmetic circuit 7 determines whether the surrounding condition of the autonomous mobile device 1 is a surrounding condition of a non-steady (abnormal) situation (S42).

If the arithmetic circuit 7 confirms that the surrounding condition is a surrounding condition of the non-steady situation (S42; YES), it performs the first mode. In the first mode, the arithmetic circuit 7 selects the first algorithm 8 (S43) and determines the movement route of the autonomous mobile device 1 using the first algorithm 8 (S44). In the present embodiment, this is equivalent to confirming that the surrounding condition is a learned surrounding condition, and determining the movement route using the first algorithm 8.

If the arithmetic circuit 7 confirms that the surrounding condition of the autonomous mobile device 1 is not a surrounding condition of the non-steady situation (S42; NO), it performs the second mode. In the second mode, the arithmetic circuit 7 selects the second algorithm 9 (S45) and determines the movement route of the autonomous mobile device 1 using the second algorithm 9 (S46). In the present embodiment, this is equivalent to confirming that the surrounding condition is not a learned surrounding condition, and determining the movement route using the second algorithm 9.

The arithmetic circuit 7 drives the moving mechanism 3 based on the determined movement route (S47).

In this way, in Embodiment 4, the learned surrounding condition is a surrounding condition of the non-steady situation. In the present embodiment, a surrounding condition of the non-steady situation is different from a surrounding condition of a steady situation. "Steady situation" includes a situation where no abnormality occurs and a situation of moving as planned. "Non-steady situation" includes an abnormal situation, a situation that something unplanned occurs, a situation that a low-frequency event occurs, or a situation deviating from the plan. In the present embodiment, a surrounding condition of the steady situation is a condition that the autonomous mobile device 1 is moved to the destination point. A surrounding condition of the non-steady situation is a condition that emergency avoidance is required. An example of a situation that emergency avoidance is required is considered a condition that a mobile entity is approaching the autonomous mobile device 1 at an abnormally high speed. When the learned surrounding condition is a surrounding condition of the non-steady situation, the trained model 80 is trained to, in response to input of input data relating to a surrounding situation that emergency avoidance is required, output output data regarding a movement route that avoids the mobile entity.

### [1.4.2 ADVANTEGEOUS EFFECTS]

In the aforementioned movement route determination system 4, the trained surrounding condition is a surrounding condition of a non-steady situation different from a steady state of moving the autonomous mobile device to a destination point. This configuration enables improvement of accuracy of determining the movement route.

### [2. VARIATIONS]

Embodiments of the present disclosure are not limited to the above embodiments. The above embodiments may be modified in various ways in accordance with designs or the like to an extent that they can achieve the problem of the present disclosure. Hereinafter, some variations or modifications of the above embodiments will be listed. One or more of the variations or modifications described below may apply in combination with one or more of the others.

Note that, in the following, even if the description applies to any of the above Embodiments 1 to 4, reference will be made to the reference signs used in Embodiment 1, solely for the sake of simplification. This does not intend to exclude the application to Embodiments 2 to 4.

In one variation, the arithmetic circuit 7 may have a function of performing a third mode. The third mode, unlike the first and second modes, does not determine the movement route of the autonomous mobile device 1 according to the surrounding condition. In the third mode, the arithmetic circuit 7 moves the autonomous mobile device 1 exactly according to given instructions. The instruction may be given in real time by a human, or it may be provided in advance and stored in the storage device 6. For example, the third mode may be a remote control mode in which the autonomous mobile device 1 is moved according to instructions given by a human through a remote controller. The third mode may also be a fixed-route mode in which the autonomous mobile device 1 is moved according to instructions given in advance. In the fixed-route mode, for example, the autonomous mobile device 1 may travel straight at a constant speed, or may move according to a predetermined pattern (e.g., a prescribed pattern such as an L-shape, S-shape, C-shape, or the like).

In one variation, the inference program used in the trained model 80 is not limited to the example in Fig. 2, and various conventional inference programs can be used. The inference program may be, for example, a regression model. Examples of regression models include decision trees, linear regression, random forests, support vector machines, Gaussian process regression, and neural networks. Examples of linear regression include multiple linear regression, ridge regression, and lasso regression.

In one variation, the configuration of the sensor system 2 is not particularly limited. The sensor system 2 may use multiple image sensors to acquire images in the front, rear, left, and right directions of the autonomous mobile device 1. The types, number, and arrangement of the sensors are set as appropriate according to the data representing the surrounding condition of the autonomous mobile device 1 for its intended use.

In one variation, the movement route determination system 4 can also be applied to devices that do not necessarily have a moving mechanism. For example, the movement route determination system 4 can be applied to a presentation device that presents movement routes to persons by at least one of visual or auditory means. Such a presentation device can be used to assist the movement of persons (e.g., persons with hearing or visual impairments).

### [3. ASPECTS]

As apparent from the above embodiments and variations, the present disclosure includes the following aspects.

### [ASPECT 1]

· A movement route determination system comprising:
an arithmetic circuit
including a first mode of using a learning-based first algorithm using a trained model trained to, in response to input of input data relating to a surrounding condition of an autonomous mobile device, output output data relating to a movement route of the autonomous mobile device, to determine the movement route, and a second mode of using a non-learning-based second algorithm using a predetermined determination rule of the movement route to determine the movement route, and
having functions of performing the first mode when the surrounding condition is a trained surrounding condition for the trained model and of performing the second mode when the surrounding condition is not the trained surrounding condition.

### [ASPECT 2]

The movement route determination system of aspect 1, wherein the trained surrounding condition is a surrounding condition that a mobile entity exists around the autonomous mobile device.

### [ASPECT 3]

· The movement route determination system of aspect 2, wherein the mobile entity is a mobile entity control relating to movement or controlled movement operation of which is unknown in advance.

### [ASPECT 4]

The movement route determination system of any one of aspects 1 to 3, wherein:
the trained surrounding condition is a surrounding condition that a similarity between a first result obtained by inputting first input data into the trained model and a second result obtained by inputting second input data into the trained model is equal to or greater than a threshold value;
the first input data is input data relating to the surrounding condition; and
the second input data is data obtained by making a change in a portion of the input data relating to the surrounding condition.

### [ASPECT 5]

The movement route determination system of aspect 1, wherein the trained surrounding condition is a surrounding condition of a non-steady situation different from a steady state of moving the autonomous mobile device to a destination point.

### [ASPECT 6]

The movement route determination system of any one of aspects 1 to 5, wherein the determination rule is set to determine, based on a current position of the autonomous mobile device and a destination point, a shortest route from the current position to the destination point, as a movement route.

### [ASPECT 7]

The movement route determination system of any one of aspects 1 to 6, wherein the arithmetic circuit has a function of performing a third mode of moving the autonomous mobile device according to given instructions.

### [ASPECT 8]

The movement route determination system of any one of aspects 1 to 7, wherein:
the trained surrounding condition is a surrounding condition that a mobile entity exists around the autonomous mobile device and a similarity between a first result obtained by inputting first input data into the trained model and a second result obtained by inputting second input data into the trained model is equal to or greater than a threshold value;
the first input data is input data relating to the surrounding condition; and
the second input data is data obtained by making a change in a portion of the input data relating to the surrounding condition.

### [ASPECT 9]

· An autonomous mobile device comprising:
the movement route determination system of any one of aspects 1 to 8;
a sensor system for obtaining a surrounding condition of the autonomous mobile device; and
a moving mechanism configured to move according to a movement route determined by the movement route determination system.

### [ASPECT 10]

A movement route determination method performed by an arithmetic circuit accessible to a learning-based first algorithm using a trained model trained to, in response to input of input data relating to a surrounding condition of an autonomous mobile device, output output data relating to a movement route of the autonomous mobile device, to determine the movement route, and a non-learning-based second algorithm using a predetermined determination rule of the movement route to determine the movement route, comprising, based on determination of whether the surrounding condition is a trained surrounding condition for the trained model, determining the movement route by using the first algorithm when the surrounding condition is the trained surrounding condition, and determining the movement route by using the second algorithm when the surrounding condition is not the trained surrounding condition.

### [ASPECT 11]

The movement route determination method of aspect 10, wherein:
the movement route is determined by using the first algorithm when a mobile entity exists around the autonomous mobile device; and
the mobile entity is a mobile entity control relating to movement or controlled movement operation of which is unknown in advance.

### [ASPECT 12]

The movement route determination method of aspect 10, wherein:
when a similarity between a first result obtained by inputting first input data into the trained model and a second result obtained by inputting second input data into the trained model is equal to or greater than a threshold value, the movement route is determined by using the first algorithm;
the first input data is input data relating to the surrounding condition; and
the second input data is data obtained by making a change in a portion of the input data relating to the surrounding condition.

### [ASPECT 13]

A program for enabling an arithmetic circuit to perform the movement route determination method of aspect 10.

### Aspects 2 to 8 are optional and not essential.

### [4. GLOSSARY]

In the present disclosure, terms in relation to machine learning are used with the following definitions.

A "trained model" means an "inference program" where "trained parameters" are embedded.

The "trained parameters" means parameters (coefficients) resulting from training using a learning dataset. The trained parameters are generated by inputting a learning dataset into a training program to mechanically adjust parameters to achieve a particular purpose. Although the trained parameters are adjusted to meet the purpose of training, the trained parameters alone are mere parameters (information such as numerical values) and can function as a trained model only when embedded in an inference program. For example, in the case of deep learning, examples of main components of the trained parameters include parameters for weighting links between nodes.

The "inference program" means a program enabling outputting a particular result in response to input, by applying an embedded trained parameters. For example, this is a program defining a series of computing procedures for applying a trained parameters resulting from training to an image given as input to output a result (authentication or determination) corresponding to the image.

The "learning dataset", which may also be referred to as a training dataset, means secondary processed data generated by performing conversion or processing on raw data using preprocessing such as removal of missing values or outliers, addition of separate data such as label information (ground truth data) or a combination thereof, in order to facilitate analysis by a target training method. The learning dataset may include "augmented" data resulting from particular conversion on raw data.

The "raw data" means data which is firstly obtained by users, benders, other business entities or researchers and converted or processed to be imported into a database.

The "training program" means a program for executing an algorithm for finding a particular rule from the learning dataset to generate a model representing that rule. Concretely, this is a program defining procedures to be executed by a computer in order to realize learning or training by an adopted training method.

### INDUSTRIAL APPLICABILITY

The present disclosure relates to movement route determination systems, autonomous mobile devices, movement route determination methods, and programs. Specifically, the present disclosure relates to a movement route determination system for determining a movement route (movement path) according to a surrounding condition, an autonomous mobile device including the movement route determination system, a movement route determination method for determining a movement route according to a surrounding condition, and a computer program for enabling execution of the movement route determination method.

In particular, the present disclosure is applicable to situations where pedestrians (mobile entities) and robots (autonomous mobile devices) move within the same space, and it aims to achieve safe and efficient passing between pedestrians and robots by generating robot behaviors (movement routes) based on pedestrian movements. Specifically, when a pedestrian will intersect the robot's direction of movement, the robot can switch its behavior to avoidance; conversely, if the pedestrian moves to avoid the robot, the robot may maintain its course or enter the pedestrian's path as appropriate. This allows the robot to avoid collisions with pedestrians and time loss, enabling safe and efficient robot movement. Therefore, when robots are used for transportation tasks in places such as factories where people and robots coexist, this disclosure makes it possible to transport goods with minimal takt time loss for related workers, without inefficiently slow (overly safety-prioritizing) routes and without collisions with people.

### REFERENCE SIGNS LIST

- 1: Autonomous Mobile Device
- 2: Sensor System
- 3: Moving Mechanism
- 4: Movement Route Determination System
- 7: Arithmetic Circuit
- 8: First Algorithm
- 80: Trained Model
- D1: Input Data
- D2: Output Data
- 9: Second Algorithm
- 200: Mobile Entity

## Claims

1. A movement route determination system comprising:
an arithmetic circuit
including a first mode of using a learning-based first algorithm using a trained model trained to, in response to input of input data relating to a surrounding condition of an autonomous mobile device, output output data relating to a movement route of the autonomous mobile device, to determine the movement route, and a second mode of using a non-learning-based second algorithm using a predetermined determination rule of the movement route to determine the movement route, and
having functions of performing the first mode when the surrounding condition is a trained surrounding condition for the trained model and of performing the second mode when the surrounding condition is not the trained surrounding condition.

2. The movement route determination system of claim 1, wherein the trained surrounding condition is a surrounding condition that a mobile entity exists around the autonomous mobile device.

3. The movement route determination system of claim 2, wherein the mobile entity is a mobile entity control relating to movement or controlled movement operation of which is unknown in advance.

4. The movement route determination system of claim 1, wherein:
the trained surrounding condition is a surrounding condition that a similarity between a first result obtained by inputting first input data into the trained model and a second result obtained by inputting second input data into the trained model is equal to or greater than a threshold value;
the first input data is input data relating to the surrounding condition; and
the second input data is data obtained by modifying a portion of the input data relating to the surrounding condition.

5. The movement route determination system of claim 1, wherein the trained surrounding condition is a surrounding condition of a non-steady situation different from a steady state of moving the autonomous mobile device to a destination point.

6. The movement route determination system of claim 1, wherein the determination rule is set to determine, based on a current position of the autonomous mobile device and a destination point, a shortest route from the current position to the destination point, as a movement route.

7. The movement route determination system of claim 1, wherein the arithmetic circuit has a function of performing a third mode of moving the autonomous mobile device according to given instructions.

8. The movement route determination system of claim 1, wherein:
the trained surrounding condition is a surrounding condition that a mobile entity exists around the autonomous mobile device and a similarity between a first result obtained by inputting first input data into the trained model and a second result obtained by inputting second input data into the trained model is equal to or greater than a threshold value;
the first input data is input data relating to the surrounding condition; and
the second input data is data obtained by making a change in a portion of the input data relating to the surrounding condition.

9. An autonomous mobile device comprising:
the movement route determination system of any one of claims 1 to 8;
a sensor system for obtaining a surrounding condition of the autonomous mobile device; and
a moving mechanism configured to move according to a movement route determined by the movement route determination system.

10. A movement route determination method performed by an arithmetic circuit accessible to a learning-based first algorithm using a trained model trained to, in response to input of input data relating to a surrounding condition of an autonomous mobile device, output output data relating to a movement route of the autonomous mobile device, to determine the movement route, and a non-learning-based second algorithm using a predetermined determination rule of the movement route to determine the movement route, comprising, based on determination of whether the surrounding condition is a trained surrounding condition for the trained model, determining the movement route by using the first algorithm when the surrounding condition is the trained surrounding condition, and determining the movement route by using the second algorithm when the surrounding condition is not the trained surrounding condition.

11. The movement route determination method of claim 10, wherein:
the movement route is determined by using the first algorithm when a mobile entity exists around the autonomous mobile device; and
the mobile entity is a mobile entity control relating to movement or controlled movement operation of which is unknown in advance.

12. The movement route determination method of claim 10, wherein:
when a similarity between a first result obtained by inputting first input data into the trained model and a second result obtained by inputting second input data into the trained model is equal to or greater than a threshold value, the movement route is determined by using the first algorithm;
the first input data is input data relating to the surrounding condition; and
the second input data is data obtained by making a change in a portion of the input data relating to the surrounding condition.

13. A program for enabling an arithmetic circuit to perform the movement route determination method of any one of claims 10 to 12.
